# EUROPEAN PATENT APPLICATION

(11) **EP 1 731 205 A1**
(43) Date of publication of application: **13.12.2006**
(21) Application number: 05730510.4
(22) Date of filing: 15.04.2005
(51) Int. Cl.: A63F 13/00, A63F 13/10

(54) **GAME MACHINE, GAME PROGRAM AND RECORDING MEDIUM**

(30) Priority: 23.04.2004 JP 2004127807
(71) Applicant: MATSUSHITA ELECTRIC INDUSTRIAL CO., LTD., Kadoma-shi, Osaka Osaka 571-0051 (JP)
(72) Inventor: KONISHI, Takaaki Matsushita Elec. Ind. Co., Ltd., Osaka-shi, Osaka 540-6319 (JP)
(74) Representative: Grünecker, Kinkeldey, Stockmair & Schwanhäusser Anwaltssozietät
(86) International application number: PCT/JP2005/007297
(87) International publication number: WO 2005/102481

(57) **Abstract**

Provides a game apparatus having game end judging means (4) that judges game end if a game executable time set in executable time storage (1) elapses, and additionally the game status reaches a saving-allowed point or clearing of the current stage is in failure. Such makeup prevents a game to be executed for a long time, and ends the game at a good stopping point, allowing the player to play the game without feeling discomfort.

## Description

### TECHNICAL FIELD

The present invention relates to a game apparatus provided with a function for preventing long-time playing, for a stationary video game showing an image with a television receiver connected or a portable video game.

### BACKGROUND ART

In recent years, a large number of video games have become popular in the world, including a stationary video game that outputs its image and sound on a television receiver, and a portable video game driven from a battery to be carried anywhere. Meanwhile, various problems are dealt with such as deterioration of children's vision and intelligence due to their playing video games for a long time.

In order to solve such problems, a game apparatus according to the conventional technology, when a preliminarily set time elapses after staring a game, either prevents the television receiver from outputting an image and sound from the video game machine, or locks an image for the game to disable continuing the game. These techniques are described in Japanese Patent Unexamined Publications No. 2001-268455, No. 2002-11242, and No. H08-330037.

Another game apparatus according to the conventional technology, when a preliminarily set time elapses after staring a game, saves the game status and then stops or suspends the game to disable continuing the game, to solve the above-mentioned problems. This technique is described in Japanese Patent Unexamined Publications No. H07-299248, No. H07-303760, and No. H07-116354.

Still another game apparatus according to the conventional technology, when a preliminarily set time elapses after staring a game, automatically turns off the power of the video game machine to disable continuing the game, to solve the above-mentioned problems. This technique is described in Japanese Utility Model Unexamined Publication No. H06-66779.

However, these conventional game apparatuses, when a preliminarily set time elapses after staring a game, force the screen to lock or to disappear while executing the game. Therefore, in a so-called action game, where the game proceeds with fighting a battle or clearing obstacles, the player may be defeated during a battle or may fail to clear an obstacle because an instantaneous response is needed, which requires replying the stage from its beginning.

In a case where, when a preliminarily set time elapses after staring a game, the game status is saved, and then the game is stopped or suspended, the amount of information to be saved is larger than in a case where saving is allowed only for certain limited status.

In a case where, when a preliminarily set time elapses after staring a game, the power of a video game machine is turned off automatically, a role playing game, where the game proceeds with solving puzzles, requires replaying from the state before saving.

### SUMMARY OF THE INVENTION

A game apparatus according to the present invention is a machine for executing a game having multiple stages and points for saving game status at respective stages. The game apparatus is equipped with an executable time storage for storing the time to be set during which a game is executable; a timer time controller for counting the present clock time or an elapsed time; a saving advisability judging means for monitoring the game status to judge whether or not the status can be saved; and a game end judging means for judging whether or not a game has ended to save the status and to output an instruction for game end if judged game end. The game end judging means judges game end if the game execution time exceeds the above game executable time, and additionally the game status can be saved.

A game apparatus according to the present invention, while executing a video game called an action game requiring an instantaneous response, does not end or suspend the video game before the current stage is cleared or ended with failing to clear the stage, and thus the player does not feel uncomfortable. Still, the game is not forced to end or suspend even after the game executable time set by the executable time storage elapses, but the game can be continued to a state that can be saved, and thus the capacity for recording the game status can be reduced.

### BRIEF DESCRIPTION OF THE DRAWINGS

Fig. 1 is a block diagram of a game apparatus according to the first exemplary embodiment of the present invention.
Fig. 2 is a stage block diagram of a game executed by the game apparatus according to the first exemplary embodiment of the present invention.
Fig. 3 is a flowchart of a game program according to the second exemplary embodiment of the present invention.
Fig. 4 is a block diagram of a game apparatus according to the third exemplary embodiment of the present invention.
Fig. 5 is a block diagram of a game apparatus according to the fourth exemplary embodiment of the present invention.
Fig. 6 is a block diagram of a game apparatus according to the fifth exemplary embodiment of the present invention.
Fig. 7 is a control flowchart of the game apparatus according to the fifth exemplary embodiment of the present invention.
Fig. 8 is another block diagram of the game apparatus according to the fifth exemplary embodiment of the present invention.
Fig. 9 is a block diagram of a game apparatus according to the sixth exemplary embodiment of the present invention.
Fig. 10 is a control flowchart of the game apparatus according to the sixth exemplary embodiment of the present invention.

### REFERENCE MARKS IN THE DRAWINGS

- 1: executable time storage
- 2: timer time controller
- 3: saving advisability judging means
- 4: game end judging means
- 5: status saving means
- 10: mobile phone
- 11: stage clearing time predicting means
- 12: music generator
- 14: game start judging means
- 19: display means
- 20: communication means

### DETAILED DESCRIPTION OF PREFERRED EMBODIMENTS

### FIRST EXEMPLARY EMBODIMENT

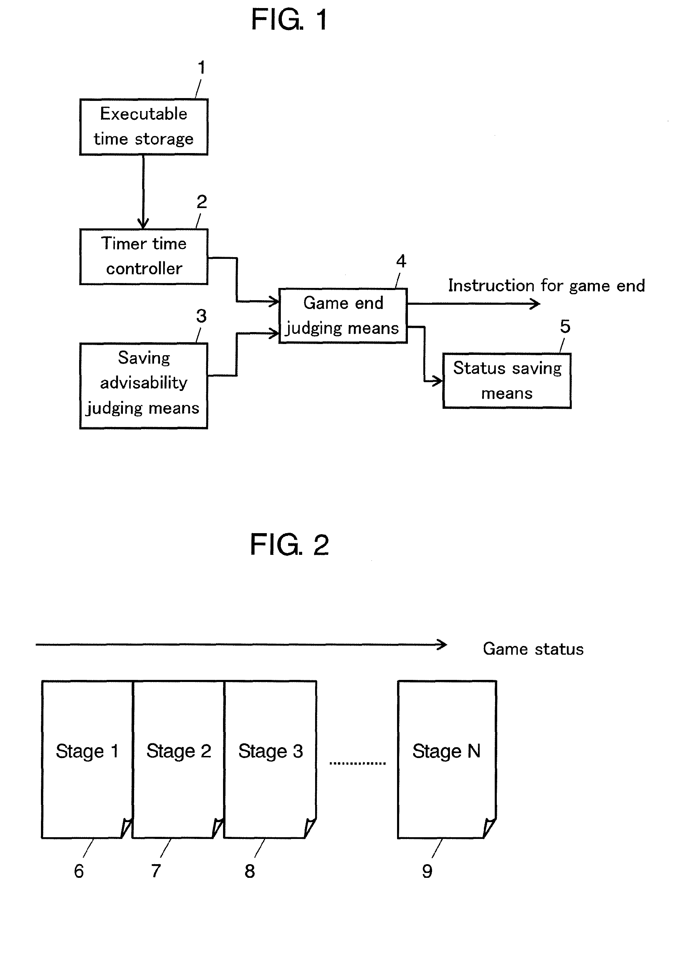

Fig. 1 illustrates a block diagram of a game apparatus according to the first exemplary embodiment of the present invention.

Executable time storage 1 stores a game executable time. A game executable time refers to a time period during which the game is intended to be executed, preliminarily set by the user. Here, the form for storing is not limited to one data structure. More specifically, the form for storing includes one that stores start time and stop time between which the game is intended to be executed; start time and a time period from start to stop; the present clock time as start time, and stop time or a time period from start to stop. The form for storing would be adequate as long as it allows judging whether or not the game is executable at the present clock time, and if executable, judging when the game is intended to be stopped; if not, when the game is executable.

Timer time controller 2 has a clock function for counting the present clock time or a timer function for counting an elapsed time. Comparison is made for timer information of timer time controller 2 itself with a game executable time stored in executable time storage 1, to judge whether or not the game is executable at the present clock time. As a result of the judgement, if a game is executable, timer time controller 2 outputs a signal of nonactive (e.g. "Low" signal); if not, when the time set by executable time storage 1 elapses, for example, active (e.g. "High" signal).

Saving advisability judging means 3 monitors the game status to judge whether or not the game status can be saved. As a result of the judgement, if the game status can be saved, saving advisability judging means 3 outputs an active signal (e.g. "High" signal); if not, a nonactive signal (e.g. "Low" signal).

Game end judging means 4 judges whether or not the game has ended according to output signals supplied from timer time controller 2 and saving advisability judging means 3. If judged game end, game end judging means 4 outputs instructions for saving the game status and for ending the game; or only for ending the game. Then, the instruction for saving the game status is transmitted to status saving means 5, and data required to reproduce the status as of then is automatically stored in status saving means 5.

Fig. 2 is a stage block diagram of the game executed by the game apparatus according to the first exemplary embodiment of the present invention, schematically illustrating an example of the status of a game executed by the game apparatus. This game is composed of each stage 1 through N, where stage 1 must be cleared to proceed to stage 2, and then the game progresses from stage 2, stage 3, etc., to stage N. Each stage in Fig. 2 has one saving point where the game status can be saved, and only the point is assumed to be able to save the game status.

A description is made for the operation of the game apparatus according to the first exemplary embodiment of the present invention, using Figs. 1 and 2.

One who plays a game or controls the game executing time sets game executing time T to executable time storage 1 before starting the game. A game executable time in this case is defined as a time between the game start time and the time when time T elapses, and executable time storage 1 stores a value corresponding to this time T.

When the game player starts the game, time count t in timer time controller 2 is set to 0, and timer time controller 2 counts up time count t to measure an elapsed time. Timer time controller 2 compares its own time count t with time T set in executable time storage 1. If time count t does not exceed time T, the present clock time is judged to be within the game executable time, and the output signal supplied from timer time controller 2 remains nonactive.

Saving advisability judging means 3 makes its output signal active at the time if the current state is in a saving-allowed state. Otherwise, the output signal is nonactive. Here, a saving-allowed state refers to a state where the saving point of the current stage in the game being executed is reached, or where clearing of the current stage is in failure.

Game end judging means 4 performs an AND operation for the output signals from timer time controller 2 and saving advisability judging means 3, to judge on game end during the game in progress. If at least either one of the output signals from timer time controller 2 and saving advisability judging means 3 is nonactive, the AND operation results in being nonactive, thus not judging game end. Therefore, when an output signal from timer time controller 2 is nonactive, the game is not forced to stop, but the game and time count by timer time controller 2 continue.

After then, when time count t of timer time controller 2 exceeds time T set in executable time storage 1, the output signal from timer time controller 2 changes to being active. However, if the output signal from saving advisability judging means 4 is nonactive, game end judging means 4 does not judge game end, but the game continues.

After the game further proceeds, when the current stage is cleared and a saving-allowed point is reached, or clearing of the current stage is in failure, the output signal from saving advisability judging means 4 inverts from nonactive to active. At this moment, both the output signals from timer time controller 2 and saving advisability judging means 3 are active, and the AND operation results in being active as well. Consequently, game end judging means 4 judges game end. Then, game end judging means 4 outputs instructions for saving the game status and for ending the game; or only for ending the game.

As a result that the game apparatus operates in the above-mentioned way, the progress of the game is controlled according to time T set in executable time storage 1, preventing the game from being executed for a long time. Meanwhile, even after time T set in executable time storage 1 elapses, the game is not forced to end, before entering a state where a point at which the game status can be saved is reached after clearing the current stage, or where clearing of the current stage is in failure. Consequently, the game ends at a good stopping point, allowing the player to play the game without feeling discomfort.

Here, the respective components: executable time storage 1, timer time controller 2, saving advisability judging means 3, and game end judging means 4 may be implemented not only with hardware but with software for controlling to implement the same relevant functions.

### SECOND EXEMPLARY EMBODIMENT

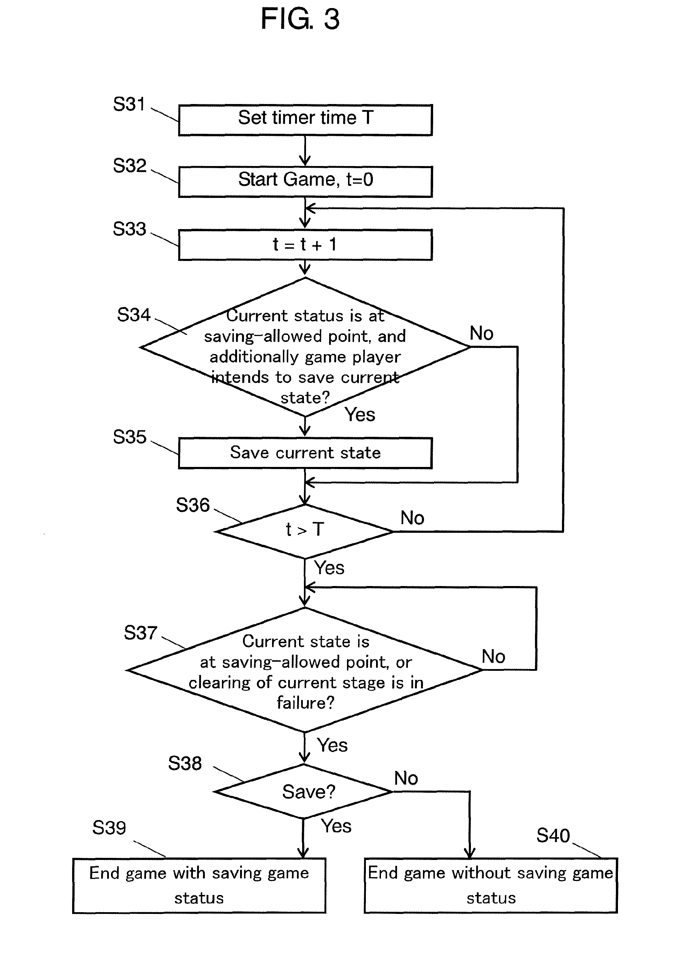

A game apparatus according to the second exemplary embodiment is controlled by means of a game program having the steps for performing the respective functions of executable time storage 1, timer time controller 2, saving advisability judging means 3, and game end judging means 4 in the first exemplary embodiment. The flowchart of the game apparatus according to the second exemplary embodiment is shown in Fig. 3.

Hereinafter, a description is made for the operation of each step in this flowchart.

Before starting a game, game executing time T is set (S31). A game executable time in this case is defined as a time between the game start time and the time when time T elapses, and a value corresponding to this time T is stored in a memory controlled by the game program.

When starting a game, time count t for controlling the game execution time is set to 0 (S32), and time count t is counted up to measure an elapsed time (S33). Counting may be performed by using time information controlled by means of the internal clock, or by counting loops associated with the progress of the game.

A game is controlled as follows before time count t of timer time controller 2 exceeds time T set in executable time storage 1.

The current state is saved when it is at a saving-allowed point, and additionally the game player intends to save the current state. The current state is not saved when it is not at a saving-allowed point, or the game player does not intends to save the current state, even if the current state is at a saving-allowed point (S34, S35). Time count t is compared with time T having been set, and counting up continues before time count t exceeds time T (S36). During this time, the game is continued by the game player.

After then, when time count t of timer time controller 2 exceeds time T set in executable time storage 1, the current state is checked whether or not it is in a saving-allowed state (S37). Then, in a state where a point at which the game status can be saved is reached after clearing the current stage, or where clearing of the current stage is in failure, the current state is saved and the game is forced to end if the game player intends to save the current state (S38, S39). If the game player does not intend to save the current state, the game is forced to end without saving the current state (S38, S40).

As mentioned above, the game program for the game apparatus according to the second exemplary embodiment of the present invention prevents a game to be executed for a long time. Further, even when time T having been set elapses, the game is not forced to end before the game status reaches a saving-allowed point, or the current stage is cleared or clearing is in failure. Consequently, the game ends at a good stopping point, allowing the player to play the game without feeling discomfort.

With a game program having the above-mentioned steps, whatever game machine that executes this game software offers the particular advantages of the present invention without requiring special hardware.

### THIRD EXEMPLARY EMBODIMENT

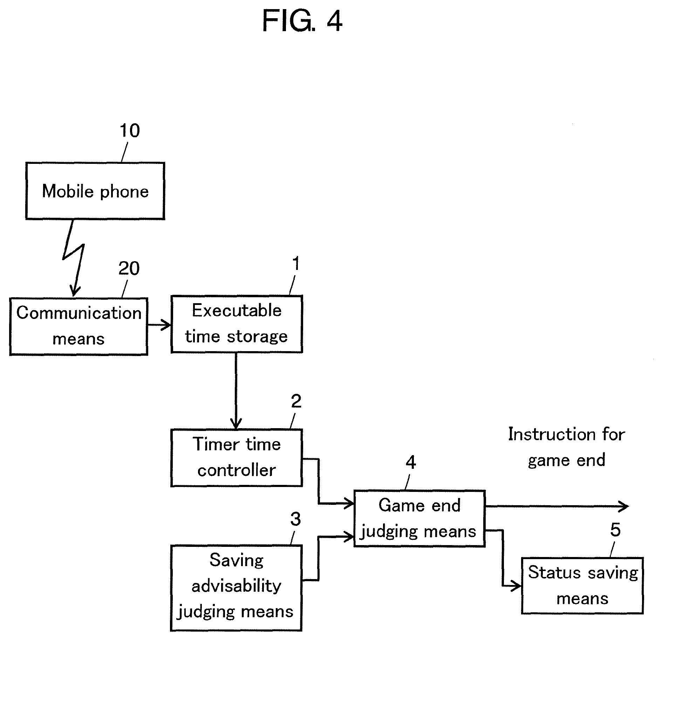

Fig. 4 illustrates a block diagram of a game apparatus according to the third exemplary embodiment of the present invention. In Fig. 4, a component same as that in Fig. 1 is given the same number to omit its description as appropriate.

Fig. 4 is different from Fig. 1 in that the game apparatus according to the third exemplary embodiment is equipped with communication means 20. Communication means 20 receives with a wired or wireless means data transmitted from a location physically separate from the game apparatus according to the third exemplary embodiment. The received data is information related to a game executable time and is set to executable time storage 1. If the game apparatus according to the third exemplary embodiment is connectable to a network such as LAN constructed in a home, for example, communication means 20 receives data transferred from another device (e.g. mobile phone 10) on the network and sets the received data as a game executable time to executable time storage 1.

Communication means 20 receives data representing a game executable time in executable time storage 1 from mobile phone 10 the phone number of which is preliminarily registered. Communication means 20, capable of mobile phone communication, receives required data from mobile phone 10, only when a phone number registered in communication means 20 agrees with that transmitted from mobile phone 10. Then, the received data is set to executable time storage 1 as a game executable time. Here, the phone number may be other data such as a password. The mobile phone communication function of communication means 20 may be implemented by separately attaching a mobile phone to the game apparatus using a given interface.

Consequently, a game administrator who controls a game executable time set in executable time storage 1 can control the game execution time, even if the game player is executing a game at a location separate from the game administrator. Even after time T set in executable time storage 1 elapses, a game is not forced to end before the game status reaches a saving-allowed point after the stage is cleared, or clearing of the current stage is in failure, preventing the game to be executed for a long time. Further, the game ends at a good stopping point, allowing the player to play the game without feeling discomfort.

Here, the functions and operation of communication means 20 may be implemented not only with hardware but with software for controlling to implement the same relevant functions. Alternatively, a step for receiving data using a communication means, and a step for setting a game executable time using this received data may be added to the game program shown in the second exemplary embodiment, to implement the above functions and operation.

### FOURTH EXEMPLARY EMBODIMENT

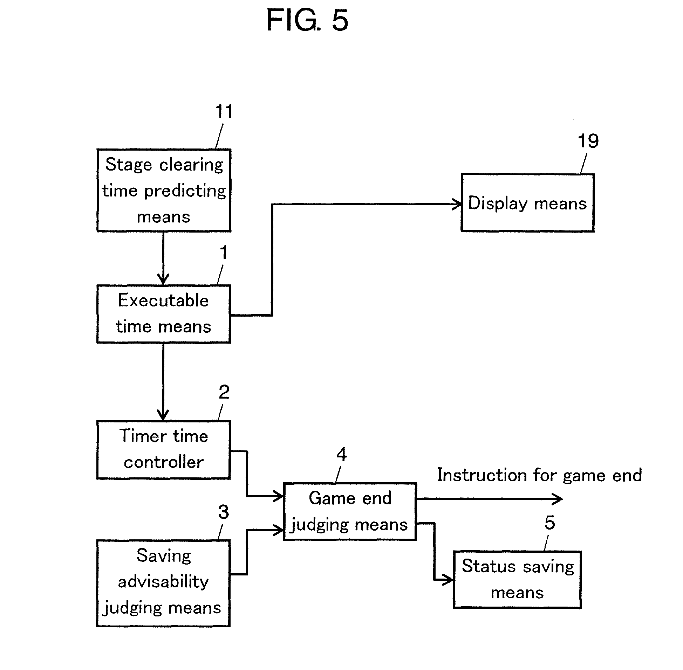

Fig. 5 illustrates a block diagram of a game apparatus according to the fourth exemplary embodiment of the present invention. In Fig. 5, a component same as that in Fig. 1 is given the same number to omit its description as appropriate.

Fig. 5 is different from Fig. 1 in that the game apparatus according to the fourth exemplary embodiment is equipped with stage clearing time predicting means 11 and display means 19. Stage clearing time predicting means 11 includes game execution times required to clear each stage n (n = 1, 2, ... , N) shown in Fig. 2. When a game is started, stage clearing time predicting means 11 sets a predicted clearing time corresponding to the currently executed stage as a game executable time in executable time storage 1.

In other words, even if the game administrator does not set a game executable time to executable time storage 1, a game executable time in executable time storage 1 results in being automatically set by stage clearing time predicting means 11. Owing to this setting, the game player can execute a game for a time required to clear the stage at the game start.

Further, in the game apparatus according to the fourth exemplary embodiment, even when a set time elapses, the game is not forced to end before the game status reaches a saving-allowed point after the current stage is cleared, or clearing of the current stage is in failure, preventing the game to be executed for a long time. Further, the game ends at a good stopping point, allowing the player to play the game without feeling discomfort.

A predicted clearing time for the current stage, set by stage clearing time predicting means 11 at the game start, may be displayed on the game start screen, for example, using display means 19. With a game executable time automatically set, this display allows the game player conveniently learn about an approximate game executable time.

Here, the functions and operation of stage clearing time predicting means 11 may be implemented not only with hardware but with software for controlling to implement the same relevant functions. Alternatively, a step for displaying a predicted end time for the stage at the game start may be added to the game program shown in the second exemplary embodiment, to implement the above functions.

### FIFTH EXEMPLARY EMBODIMENT

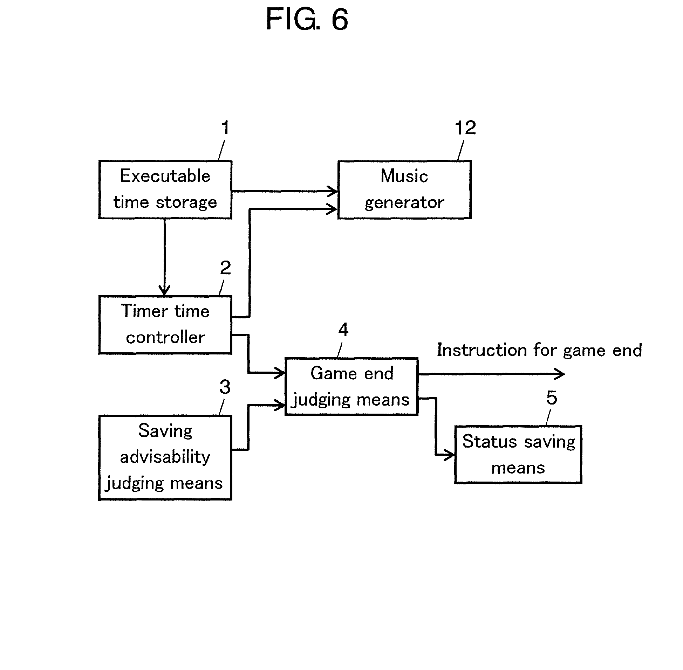

Fig. 6 illustrates a block diagram of a game apparatus according to the fifth exemplary embodiment of the present invention. In Fig. 6, a component same as that in Fig. 1 is given the same number to omit its description as appropriate.

Fig. 6 is different from Fig. 1 in that the game apparatus according to the fifth exemplary embodiment is equipped with music generator 12. Music generator 12 compares a game executable time set in executable time storage 1 with a counted time of timer time controller 2, to generate music, or to change the tone or tempo of music being played, when the time difference reaches a given value.

Specifically, the game apparatus operates as follows. Here, time T is assumed to be set as a game executable time. A given time for representing that the estimated end clock time is approaching is to be T1.

At t (t ≦ T - T1), where T is a time set in executable time storage 1, regular game music is being played; At t (T - T1 < t ≦ T), music for noticing game end is generated to notify the game player that time T is approaching. The generated music may be played simultaneously with or instead of the regular game music. After that, when time T elapses, the tone or type of the generated music is changed to notify the game player that time T has elapsed.

Alternatively, the next operation may be performed. That is, at t (t ≦ T - T1), where T is a time set in executable time storage 1, music is being played at regular tempo L1; At t (T - T1 < t ≦ T), music is being played at faster tempo L2, to notify the game player that time T is approaching. After that, when time T elapses, music is being played at further faster tempo L3, to notify the game player that time T has elapsed. Here tempos L1, L2, and L3 satisfy L1 < L2 < L3.

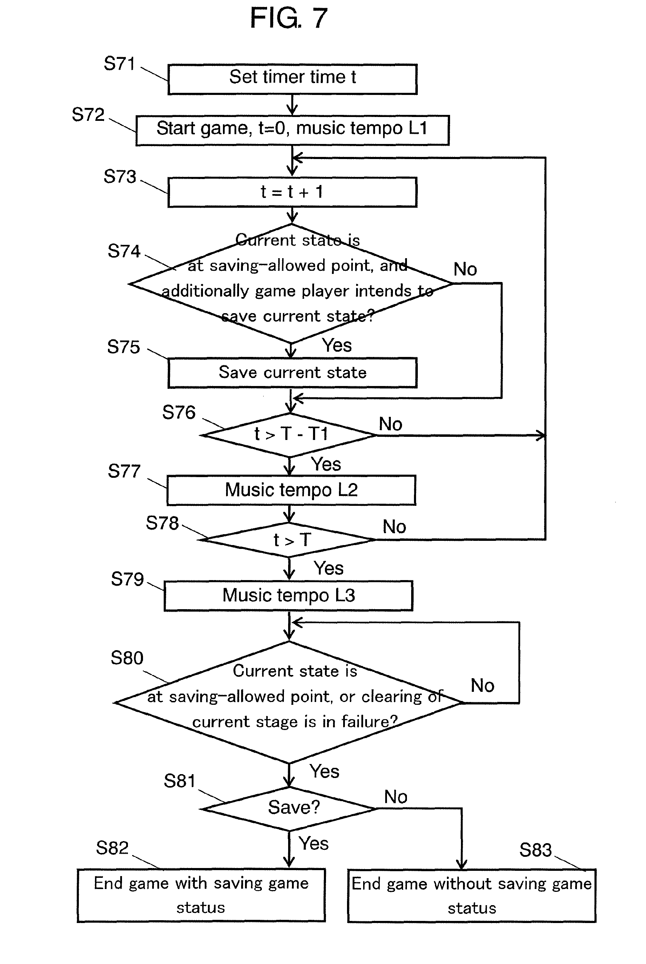

Fig. 7 is a control flowchart of the game apparatus according to the fifth exemplary embodiment of the present invention. A description is made for the operation of the game apparatus according to the fifth exemplary embodiment, which changes music tempo as time elapses.

Before a game is started, timer time T representing a game executable time is set to executable time storage 1 (S71). When the game is started, time count t of timer time controller 2 is set to 0, and the tempo of game music is set to L1 (S72). As time associated with the game progress elapses, time count t is counted up (S73).

First, before counted value t of timer time controller 2 exceeds time T set in executable time storage 1, the game is controlled as follows.

The current state is saved when it is at a saving-allowed point, and additionally the game player intends to save the current state. The current state is not saved when it is not at a saving-allowed point, or the game player does not intends to save the current state, even if the current state is at a saving-allowed point (S74, S75).

Further, judgement is made whether or not counted value t of timer time controller 2 has exceeded (T-T1), where T is a time set in executable time storage 1 (S76). When (T-T1) elapses, music tempo L2 is set to pick up the tempo (S77), notifying the game player that time T is approaching.

Next, judgement is made whether or not counted value t of timer time controller 2 has exceeded time T set in executable time storage 1 (S78). When time T elapses, music is being played at further faster tempo L3 (S79), to notify the game player that time T has elapsed.

Still, judgement is made whether or not the current state is in saving-allowed state (S80). If a saving-allowed point is reached, or clearing of the current stage is in failure, the current state is saved if the game player intends so, and the game is forced to end (S81, S82). Meanwhile, if the game player does not intend to save the current state, the game is forced to end without saving the current state (S81,S83).

Consequently, the game player learns by music that the game execution time is approaching time T set in executable time storage 1. Still, even if time T elapses, the game is not forced to end before the game status reaches a saving-allowed point, or clearing of the current stage is in failure, preventing the game to be executed for a long time. Further, the game ends at a good stopping point, allowing the player to play the game without feeling discomfort.

Here, the functions and operation of music generator 12 may be implemented not only with hardware but with software for controlling to implement the same relevant functions. Alternatively, a step for sounding when the present clock time is within a certain period of time before ending of the game executable time may be added to the game program shown in the second exemplary embodiment, to implement the above functions.

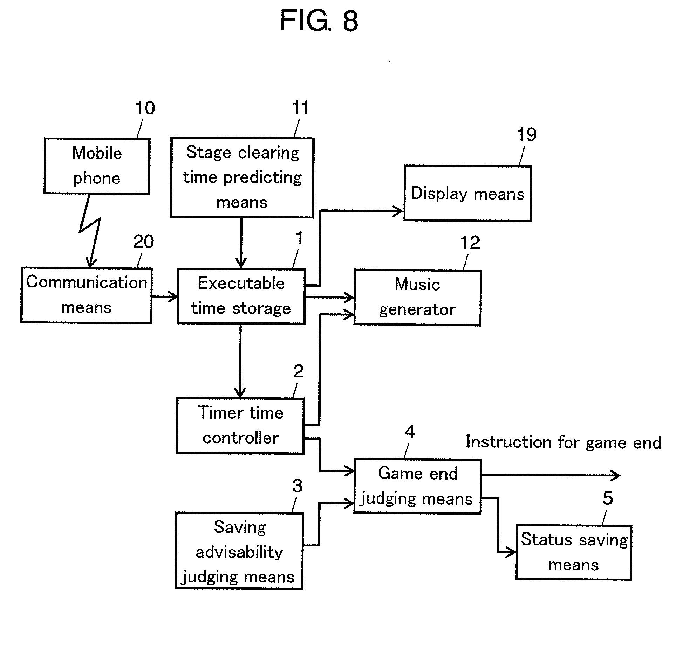

Furthermore, as shown in Fig. 8, mobile phone 10 and communication means 20 described in the third exemplary embodiment, and stage clearing time predicting means 11 described in the fourth exemplary embodiment may be combined with display means 19 for providing information on time related to game end, or music generator 12 in the fifth exemplary embodiment.

Combining in this way allows a game executable time to be set by the game administrator, or by the stage clearing time predicting means automatically. For juvenile game players, a game executing time can be restricted to prevent them from playing excessively. Further, game players themselves can share the information on a game executable time forcibly set, preventing the game to be executed for a long time. Additionally, the game ends at a good stopping point, allowing the player to play the game without feeling discomfort, which offers the particular, nonconventional advantages.

### SIXTH EXEMPLARY EMBODIMENT

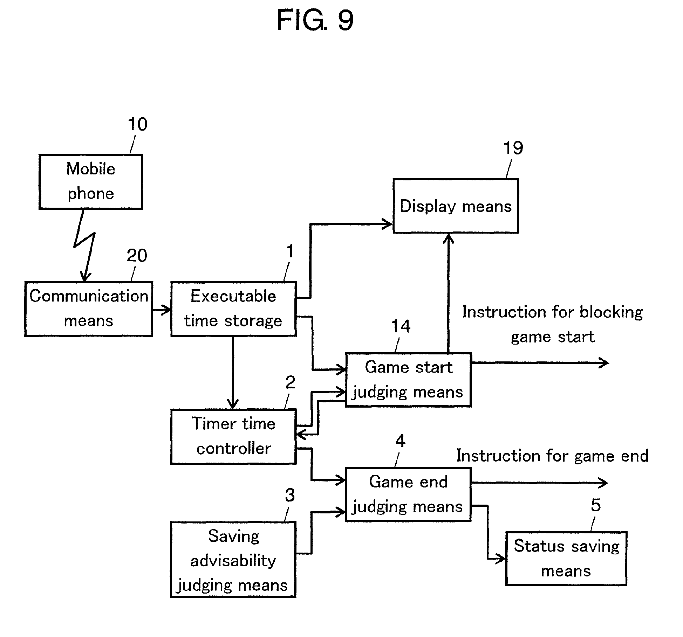

Fig. 9 illustrates a block diagram of a game apparatus according to the sixth exemplary embodiment of the present invention. In Fig. 9, a component same as that in the exemplary embodiments described hereinbefore is given the same number to omit its description as appropriate.

Fig. 9 is different from those in the other exemplary embodiments in that the game apparatus according to the sixth exemplary embodiment is equipped with game start judging means 14. Game start judging means 14 compares information on a game executable time set in executable time storage 1, with that on the clock time in timer time controller 2, to judge whether or not the present clock time is at game executable clock time. If game start judging means 14 judges that the present clock time is not at game executable clock time, it issues an instruction for blocking game start.

A description is made for the operation of a game apparatus according to the sixth exemplary embodiment.

First, game executable clock time is set to executable time storage 1 in addition to game start time. This setting may be made using communication means 20 described in the third exemplary embodiment. Start time and estimated end clock time, or start time and an estimated game execution time are set as data for executable clock time, to enable judging whether or not the present clock time is within the set period of time. This game executable time having been set is stored in a nonvolatile memory to preserve the setting content after power off.

At game start, game start judging means 14 compares the present clock time that timer time controller 2 is counting up, with game executable clock time stored in executable time storage 1. If game start judging means 14 judges that the present clock time is at an game executable clock time, an instruction for blocking game start, namely an output signal from game start judging means 14, becomes nonactive (e.g. "Low" signal). In this case, time count t of timer time controller 2 is counted up and a game is started.

The operation after game start is the same as that in the first exemplary embodiment.

However, if a game is attempted to be started at clock time that game start judging means 14 judges that it is not at a game executable clock time, an instruction for blocking game start, namely an output signal from game start judging means 14, becomes active (e.g. "High" signal). Therefore, the program controlling the game progress does not start a game.

In this case, display may be performed using display means 19 indicating that a game is not available now. Besides, information on the game executable time having been set may be displayed.

In this way, the game apparatus according to the sixth exemplary embodiment disables playing a game except at time designated by the game administrator, preventing the game to be executed for a long time. Showing a game executable time in a case where a game is not started allows one who intends to play the game to wait until the clock time, to start the game.

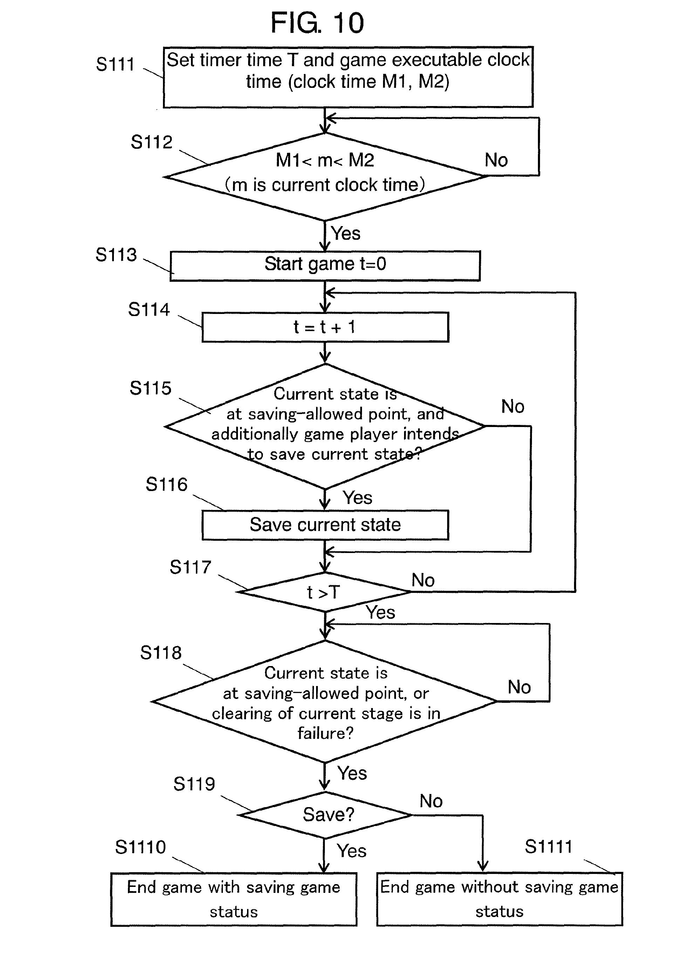

Fig. 10 illustrates the control flowchart of the game apparatus according to the sixth exemplary embodiment of the present invention. A description is made for the operation of the game apparatus according to the sixth exemplary embodiment using Fig. 10.

The game administrator sets timer time T representing a game executable time from the present clock time, and game executable clock times (M1, M2) between which a game can be executed (S111). If clock time M1 is 10:00, and M2 is 16:00, for example, the game administrator is to permit to execute a game from 10:00 to 16:00. Next, judgement is made whether or not the present clock time is at game executable clock time (M1 < present clock time < M2) having been set (S112). If judged that the present clock time is not at the game executable clock time, game start is blocked. Meanwhile, if judged that the present clock time is at the game executable clock time (M1 < present clock time < M2), a game is started with its determined clock time being the present clock time (S113). That is, timer time controller 2 starts counting up with the present clock time being a starting point. From then on, the operation S113 through S1111 of the flowchart, those controlling game progress according to time T having been set, are the same as those described in the second exemplary embodiment.

These operations disable playing a game except at time designated by the game administrator. Meanwhile, when a game is executed at time designated by the game administrator, even if time T having been set according to the game executable time elapses, the game is not forced to end before the game status reaches a saving-allowed point, or clearing of the current stage is in failure, preventing the game to be executed for a long time. Further, the game ends at a good stopping point, allowing the player to play the game without feeling discomfort.

Here, the functions and operation of game start judging means 14 may be implemented not only with hardware but with software for controlling to implement the same relevant functions. Alternatively, a step for judging whether or not the present clock time is at game executable clock time by comparing information on a game executable time having been set with the counted value of the present clock time or an elapsed time, and a step for disabling game start except at a game executable clock time may be added to the game program shown in the second exemplary embodiment, to implement the above functions.

### INDUSTRIAL APPLICABILITY

A game apparatus according to the present invention restricts a game execution time to prevent deterioration of children's vision and intelligence, applicable to a video game machine displaying an image on the screen of a television receiver connected, or to a portable video game machine.

## Claims

1. A game apparatus that executes a game having a plurality of stages and points for saving a status of the game in the respective stages, comprising:
an executable time storage that stores a game executable time to be set;
a timer time controller that counts one of a present clock time and an elapsed time;
a saving advisability judging means that monitors game status and judges advisability of saving the game status; and
a game end judging means that judges on game end, and if judged game end, outputs an instruction for saving the game status and for ending the game, wherein the game end judging means judges game end if a game execution time exceeds the game executable time, and additionally game status is in a state that allows saving.

2. The game apparatus as claimed in claim 1, wherein a predicted end time of a stage at game start is displayed.

3. The game apparatus as claimed in one of claims 1 and 2, wherein the game apparatus sounds when a counted time of the timer time controller is within a certain period of time before an end of the game executable time.

4. The game apparatus as claimed in claims 1, further comprising a game start judging means that compares information on the game executable time, with an output value from the timer time controller, and judges whether or not a present clock time is at game executable clock time, wherein the game start judging means disables starting a game at a clock time except the game executable clock time.

5. The game apparatus as claimed in one of claim 1 and claim 4, wherein the game executable time is set using a wireless or wired communication means.

6. A program that has a computer execute a game having a plurality of stages and points for saving a status of the game in the respective stages, comprising:
a step for setting a game executable time;
a step for counting one of a present clock time and an elapsed time;
a step for monitoring the game status and judging advisability of saving the game status;
a step for judging on game end;
and
a step for saving the game status and ending the game if judged game end, wherein the step for judging on game end judges game end if a game execution time exceeds the game executable time, and additionally the game status is in a state that allows saving.

7. The game program as claimed in claim 6, further comprising a step for displaying a predicted end time of the stage at game start.

8. The game program as claimed in one of claim 6 and claim 7, further comprising a step for sounding when a present clock time is within a certain period of time before an end of the game executable time.

9. The game program as claimed in claim 6, further comprising:
a step for comparing information on the game executable time having been set with a counted value of one of a present clock time and an elapsed time, and judging whether or not a present clock time is at a game executable clock time; and
a step for blocking game start if a present clock time is not at the game executable clock time.

10. The game program as claimed in one of claim 6 and claim 9, further comprising:
a step for receiving data using one of wireless and wired communication means; and
a step for setting the game executable time using the data.

11. A recording medium that has a game program recorded therein, wherein the program has a computer execute a game having a plurality of stages and points for saving a status of the game in the stages, comprising:
a step for setting a game executable time;
a step for counting one of a present clock time and an elapsed time;
a step for monitoring the game status and judging advisability of saving the game status;
a step for judging game end;
a step for saving the game status and ending the game if judged game end, wherein the step for judging on game end judges game end if a game execution time exceeds the game executable time, and additionally the game status is in a state that allows saving.

## Amended claims

### Amended claims under Art. 19.1 PCT

**1.** Amended) A game apparatus that executes a game having a plurality of stages and points for saving a status of the game in the respective stages, comprising:
an executable time storage that stores a game executable time to be set;
a timer time controller that counts one of a present clock time and an elapsed time;
a saving advisability judging means that monitors game status and judges advisability of saving the game status; and
a game end judging means that judges on game end, and if judged game end, outputs an instruction for saving the game status and for ending the game, wherein the game end judging means judges game end if a game execution time exceeds the game executable time, and additionally game status is in a state that allows saving and saves the game status.

**2.** The game apparatus as claimed in claim 1, wherein a predicted end time of a stage at game start is displayed.

**3.** The game apparatus as claimed in one of claims 1 and 2, wherein the game apparatus sounds when a counted time of the timer time controller is within a certain period of time before an end of the game executable time.

**4.** The game apparatus as claimed in claims 1, further comprising a game start judging means that compares information on the game executable time, with an output value from the timer time controller, and judges whether or not a present clock time is at game executable clock time, wherein the game start judging means disables starting a game at a clock time except the game executable clock time.

**5.** The game apparatus as claimed in one of claim 1 and claim 4, wherein the game executable time is set using a wireless or wired communication means.

**6.** (Amended) A program that has a computer execute a game having a plurality of stages and points for saving a status of the game in the respective stages, comprising:
a step for setting a game executable time;
a step for counting one of a present clock time and an elapsed time;
a step for monitoring the game status and judging advisability of saving the game status;
a step for judging on game end;
and
a step for saving the game status and ending the game if judged game end, wherein the step for judging on game end judges game end if a game execution time exceeds the game executable time, and additionally the game status is in a state that allows saving and saves the game status.

**7.** The game program as claimed in claim 6, further comprising a step for displaying a predicted end time of the stage at game start.

**8.** The game program as claimed in one of claim 6 and claim 7, further comprising a step for sounding when a present clock time is within a certain period of time before an end of the game executable time.

**9.** The game program as claimed in claim 6, further comprising:
a step for comparing information on the game executable time having been set with a counted value of one of a present clock time and an elapsed time, and judging whether or not a present clock time is at a game executable clock time; and
a step for blocking game start if a present clock time is not at the game executable clock time.

**10.** The game program as claimed in one of claim 6 and claim 9, further comprising:
a step for receiving data using one of wireless and wired communication means; and
a step for setting the game executable time using the data.

**11.** (Amended)A recording medium that has a game program recorded therein, wherein the program has a computer execute a game having a plurality of stages and points for saving a status of the game in the stages, comprising:
a step for setting a game executable time;
a step for counting one of a present clock time and an elapsed time;
a step for monitoring the game status and judging advisability of saving the game status;
a step for judging game end;
a step for saving the game status and ending the game if judged game end, wherein the step for judging on game end judges game end if a game execution time exceeds the game executable time, and additionally the game status is in a state that allows saving and saves the game status.
